# EUROPEAN PATENT SPECIFICATION

(11) **EP 0 683 833 B1**
(45) Date of publication and mention of the grant of the patent: **28.05.1997**
(21) Application number: 94907738.2
(22) Date of filing: 12.01.1994
(51) Int. Cl.: D21D 5/02

(54) **PRESSURIZED SCREEN ARRANGEMENT**
DRUCKSIEBVORRICHTUNG
TAMIS SOUS PRESSION

(30) Priority: 10.02.1993 SE 9300419
(43) Date of publication of application: 29.11.1995
(73) Proprietor: SUNDS DEFIBRATOR INDUSTRIES AB, S-851 94 Sundsvall (SE)
(72) Inventor: LARSSON, Pär-Erik, Alphaville 06454-50-Barueri, SP (BR); LINDENAU, Thomas, S-865 33 Alnö (SE)
(74) Representative: Sundqvist, Hans
(86) International application number: PCT/SE94/00013
(87) International publication number: WO 94/18387

(56) References cited:
- WO-A-90/05807
- US-A- 3 953 325
- US-A- 4 188 286

## Description

This invention relates to a pressurized screen arrangement for the screening of lignocellulose-containing fiber material in the form of pulp suspension according to the preamble of claim 1. Such a pressurized screen arrangement is known for example from US-A-3 953 325.

A pressurized screen normally comprises three main parts: a screen housing, a screen cage and a rotor. The screen cage has the object to act as a bar for coarse material, while fibers are allowed to pass through the screen apertures. The screen cage can be constructed, for example, of a perforated or slotted plate with smooth or corrugated surface. The screen cage, alternatively, can be formed of spaced rods, through which the fibers, but not the impurities, can pass. It is, of course, most essential for the screening result, that shortcircuit is prevented, i.e. that unscreened material is not mixed with screened material.

A conventional way of attaching the screen cage in the screen housing is to form rings at the ends of the screen cage. The rings have conic surfaces, which are fitted into corresponding conic seats in flanges in the screen housing. These conic surfaces, in combination with axial prestressing, bring about a significant limitation of the end portions of the screen cage with regard to radial movement (translation) and tangential angular movement (rotation).

In order to prevent clogging of the screen cage, a rotor is used which produces suction and pressure pulses. These pulses give rise to radially directed forces along the circumference of the screen cage. These forces cause a statically determined radial movement of the shell surface of the screen cage. Owing to the aforementioned prestressing, however, the end portions of the screen cage cannot be moved in this way. Due to the design, the end portions instead are forced to assume the shape determined by the conic rings fitted into the conic seats. This deformation at the end portions causes stresses in the material, which are secondary by their nature, but due to the dynamic character of the load are totally decisive for the service life of the screen cage. The size of the forces depends on various factors, for example the rotor design, the consistency of the fiber material, etc.

The present invention offers a solution of the aforesaid problem. According to the invention, the stresses in the end portions of the screen cage are eliminated by a radial clearance between the screen cage and attachment members of the screen housing. This renders it possible for the end portions of the screen cage to move freely. The characterizing features of the invention are apparent from the attached claims.

The invention is described in the following, with reference to the accompanying drawings showing an embodiment of the invention.
- Fig. 1: is a cross-section of a pressurized screen according to the invention.

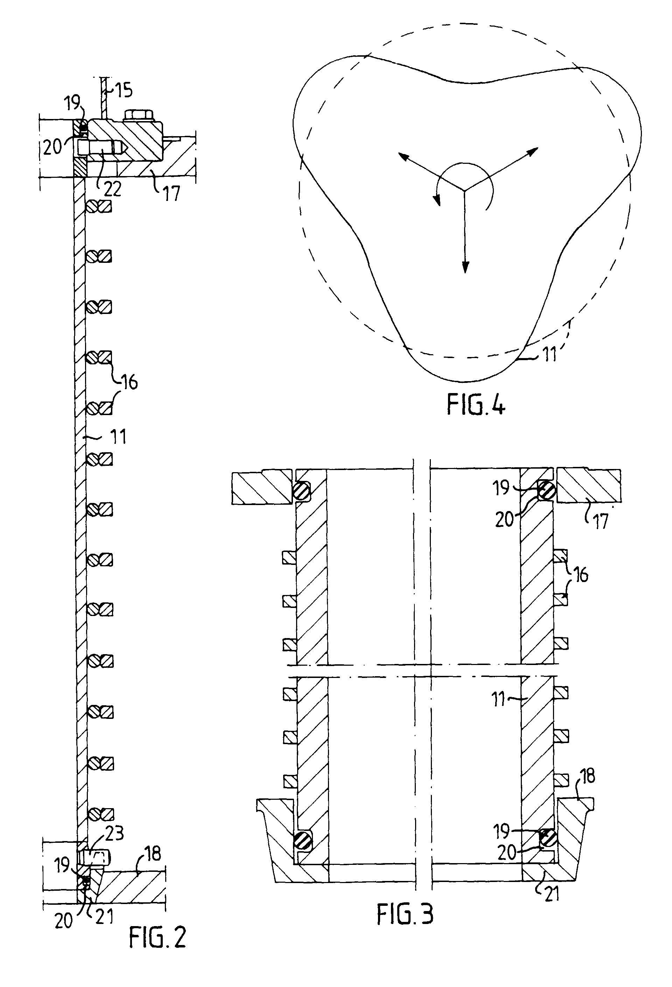

- Fig. 2: shows on a larger scale the upper and, respectively, lower attachment of the screen cage.
- Fig. 3: shows schematically the principle of the attachment according to the invention.
- Fig. 4: shows schematically the deformation of the screen cage in operation due to the rotation forces.

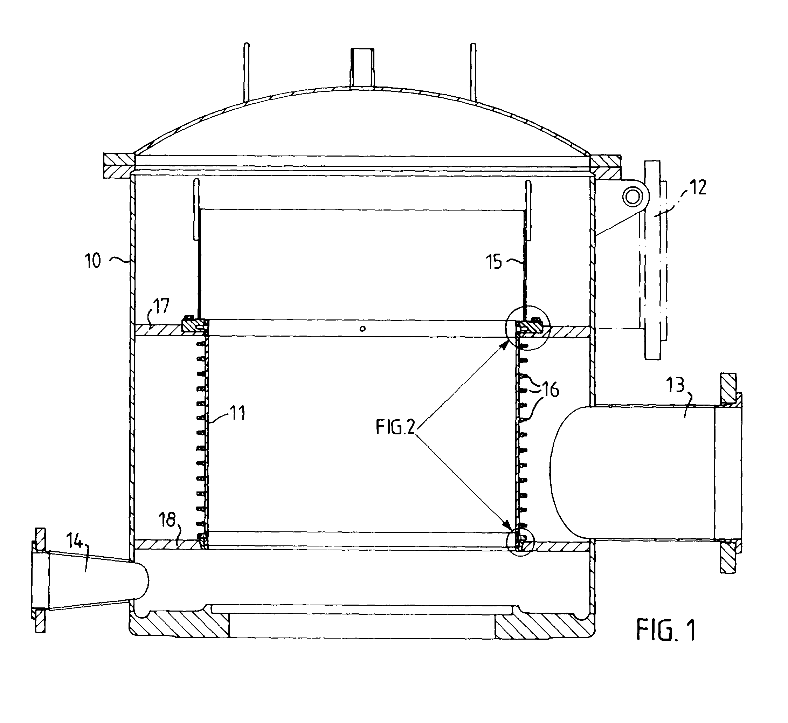

The pressurized screen arrangement shown in Fig. 1 comprises a vertical screen housing 10 with a screen cage 11. To the housing 10 are connected an inlet 12 for the pulp suspension, an outlet 13 for accept, i.e. pulp containing fibers having passed through the apertures of the screen cage, and an outlet 14 for reject, i.e. coarse material having not passed through the apertures of the screen cage. In the screen housing 10, on the inside of the screen cage 11, a rotor (not shown) shall be located to produce the suction and pressure pulses required in the pulp suspension for the screening. The rotor shall be of such a design that the radially directed rotation forces caused by the suction and pressure pulses balance each other in radial direction. This implies, that the screen cage is self-supporting with regard to radial forces.

The pressurized screen shown is provided with a coarse screen plate 15 in the upper portion of the screen housing 10 in connection to the inlet 12. This coarse screen plate 15 is intended to separate scrap and the like at the inlet in the screen housing.

The screen cage shown is constructed of rods and on its outside is provided with a number of supporting strips 16 extending all about. The screen housing 10 is provided with first and, respectively, second attachment members 17,18 for the screen cage 11. These attachment members are formed with flanges, which also define the pulp inlet portion (inject portion) of the screen housing from the accept portion and, respectively, the accept portion from the reject portion. The attaching of the ends of the screen cage 11 on the attachment members 17,18 has the object both to hold the screen cage and to prevent shortcircuit between unscreened material (inject and reject) and screened material (accept).

The fastening of the screen cage 11 on the attachment members 17,18 is formed so that both ends of the screen cage are fitted into the attachment members 17,18 with radial clearance. In the resulting gap between the screen cage and attachment members preferably a separate seal 19 extending all about is provided. This seal can be placed in a groove 20 at each end of the screen cage 11.

The radial clearence shall be well defined and have a size sufficient to prevent deformations caused by the pulsating, forces arising during the screening process. The clearance, however, shall be not greater than to ensure that satisfactory sealing can be maintained.

As the screen cage 11 is self-supporting, only an axial fixing is required, which is achieved by means of an axial support 21 at the second attachment member 18. This second attachment member 18 preferably should be the lower one in the case of a vertical screen. In order to prevent rotation of the screen cage 11, a number of rotation stopping members 22,23, for example radial pins, are located between the attachment members 17,18 and the ends of the screen cage 11.

By this arrangement, the stress level in the screen cage 11 can be lowered and, thus, be used for material reduction. Alternatively, the possibility of a higher load can be utilized for increasing the screen capacity. The dimensioning stress condition consists only of the statically determined tangential stresses. These stresses, besides, can be predetermined in a safer way.

The invention, of course, is not restricted to the embodiment shown, but can be varied within the scope of the appended claims.

## Claims

1. A pressurized screen arrangement for screening lignocellulose-containing fiber material, comprising a screen housing (10) with a screen cage (11) and a rotor where both ends of the screen cage (11) are arranged in first and, respectively, second attachment members (17,18) in the screen housing (10), **characterized in** that both ends of the screen cage (11) are fitted into the attachment members (17,18) with radial clearance, and that an axial support (21) is provided at least at one of the attachment members (17,18).

2. A pressurized screen arrangement as defined in claim 1, **characterized in** that rotation stopping members (22,23) are provided between at least one of the attachment members (17,18) and the screen cage (11) to prevent rotation of the screen cage.

3. A pressurized screen arrangement as defined in claim 1 or 2, **characterized in** that the screen cage (11) is formed of a perforated or slotted plate.

4. A pressurized screen arrangement as defined in claim 1 or 2, **characterized in** that the screen cage (11) is formed of rods kept together by support strips (16) extending all about.

5. A pressurized screen arrangement as defined in any one of the preceding claims, **characterized in** that a separate seal (19) is provided in the gap between the ends of the screen cage (11) and the first and, respectively, the second attachment member (17,18).

6. A pressurized screen arrangement as defined in claim 5, **characterized in** that the separate seal (19) is located in a groove (20) extending all about at each end of the screen cage (11).

## Patentansprüche

1. Drucksiebanordnung zum Sieben von Lignozellulose enthaltendem Fasermaterial, umfassend ein Siebgehäuse (10) mit einem Siebkäfig (11) und einem Rotor, wobei beide Enden des Siebkäfigs (11) im Siebgehäuse (10) in einem ersten und zweiten Halteelement (17, 18) angeordnet sind,
**dadurch gekennzeichnet,**
daß die beiden Enden des Siebkäfigs (11) in die Halteelemente (17, 18) mit radialem Spiel eingesetzt sind, und daß an wenigstens einem Halteelement (17, 18) ein axiales Auflager (21) vorgesehen ist.

2. Drucksiebanordnung nach Anspruch 1,
**dadurch gekennzeichnet,**
daß eine Drehung verhindernde Elemente (22, 23) zwischen wenigstens einem der Halteelemente (17, 18) und dem Siebkäfig (11) vorgesehen sind, um ein Verdrehen des Siebkäfigs zu verhindern.

3. Drucksiebanordnung nach Anspruch 1 oder 2,
**dadurch gekennzeichnet,**
daß der Siebkäfig (11) als perforierte oder geschlitzte Platte ausgebildet ist.

4. Drucksiebanordnung nach Anspruch 1 oder 2,
**dadurch gekennzeichnet,**
daß der Siebkäfig (11) aus Stäben ausgebildet ist, die durch Halteleisten (16) zusammengehalten werden, die sich über deren Länge erstrecken.

5. Drucksiebanordnung nach einem der vorhergehenden Ansprüche
**dadurch gekennzeichnet,**
daß eine separate Dichtung (19) in dem Spalt zwischen den Enden des siebkäfigs (11) und dem ersten bzw. zweiten Halteelement (17, 18) vorgesehen ist.

6. Drucksiebanordnung nach Anspruch 5,
**dadurch gekennzeichnet,**
daß die separate Dichtung (19) in einer Nut (20) angeordnet ist, die sich an jedem Ende des Siebkäfigs (11) um diesen herum erstreckt.

## Revendications

1. Système de tamis sous pression pour le classage d'un matériau en fibres contenant de la ligno cellulose comportant un logement de tamis (10) avec une cage de tamis (11) et un rotor, dans lequel les deux extrémités de la cage du tamis (11) sont disposées dans un premier, et respectivement dans un second élément de fixation (17, 18), dans le logement de tamis (10), caractérisé en ce que les deux extrémités de la cage de tamis (11) sont ajustés dans les éléments de fixation (17, 18) avec un jeu radial et en ce que l'on prévoit un support axial (21) au moins sur l'un des éléments de fixation (17, 18).

2. Système de tamis sous pression tel que défini dans la revendication 1, caractérisé en ce que des moyens d'arrêt de la rotation (22, 23) sont prévus entre au moins l'un des éléments de fixation (17, 18) et la cage de tamis (11) pour empêcher la rotation de la cage de tamis.

3. Système de tamis sous pression tel que défini dans les revendications 1 ou 2 caractérisé en ce que la cage de tamis (11) est constituée d'une plaque perforée ou d'une plaque munie de fentes.

4. Système de tamis sous-pression selon l'une des revendications 1 ou 2 caractérisé en ce que la cage de tamis (11) est constituée de tiges maintenues ensemble par des bandes de support (16) s'étendant tout autour.

5. Système de tamis sous pression selon l'une quelconque des revendications précédentes caractérisé en ce que l'on prévoit un joint séparé (19) dans l'intervalle compris entre les extrémités de la cage de tamis (11) et le premier et, respectivement, le second élément de fixation (17, 18).

6. Système de tamis sous pression selon la revendication 5, caractérisé en ce que le joint séparé (19) s'étendant tout autour, à chaque extrémité de la cage de tamis (11).
